(19) Europäisches Patentamt
European Patent Office
Office européen des brevets

(11) **EP 2 522 558 B1**

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(51) Int Cl.:
**B60S 9/02** (2006.01)   **B60S 9/08** (2006.01)

(21) Anmeldenummer: **12167073.1**

(22) Anmeldetag: **08.05.2012**

(54) **Stützvorrichtung für Sattelstützsysteme**

Support device for semi-trailers supporting systems

Dispositif d'appui pour support de semi-remorques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2011 DE 102011075805**

(43) Veröffentlichungstag der Anmeldung:
**14.11.2012 Patentblatt 2012/46**

(73) Patentinhaber: **SAF-HOLLAND GmbH**
**63856 Bessenbach (DE)**

(72) Erfinder: **Weber, Elmar**
**48249 Dülmen (DE)**

(74) Vertreter: **Müller Schupfner & Partner**
**Patent- und Rechtsanwaltspartnerschaft mbB**
**Bavariaring 11**
**80336 München (DE)**

(56) Entgegenhaltungen:
**EP-A1- 2 223 830     US-A- 2 352 117**
**US-A- 3 489 395**

EP 2 522 558 B1

## Beschreibung

Die vorliegende Erfindung betrifft eine Stützvorrichtung für Sattelstützsysteme, gemäß dem Oberbegriff des Anspruchs 1.

Stützvorrichtungen der in der Rede stehenden Art sind aus dem Stand der Technik hinlänglich bekannt, so werden beispielsweise Sattelauflieger, während sie nicht an der Zugmaschine befestigt sind, von einer Stützvorrichtung, auch Stützwinde genannt, während des Parkens gestützt. Um eine widerstandsarme und verschleißarme Kraftübertragung dieser Stützsysteme zu ermöglichen, ist eine kontinuierliche Schmierung der Kraftübertragungsteile der Stützvorrichtung notwendig. Dabei wird meist hochviskoses Fett oder ähnliche Schmiermittel über außen an der Stützvorrichtung angebrachte Schmiernippel in das Innere der Stützvorrichtung gepumpt, um dort in Kontakt mit zueinander relativ beweglichen Teilen zu gelangen. Diese Vorgehensweise ist insofern ineffizient, dass das Schmiermittel sich im gesamten Innenraum der Stützvorrichtung ausbreitet, nicht aber zwangsläufig mit den sich relativ zueinander bewegenden Teilen der Stützvorrichtung in Kontakt gelangt. Weiterhin sind die aus dem Stand der Technik bekannten Stützvorrichtungen nur kaum gegen Entweichen von Schmiermittel sowie gegen das Eindringen von Fremdkörpern in den Innenbereich der Stützvorrichtung, bzw. den Bereich, in dem sich das Schmiermittel und die sich relativ zueinander beweglichen Teile befinden, abgedichtet. Die Folge ist ein hoher Schmiermittelverbrauch sowie eine Gefahr des Verschmutzens des Schmiermittels und dadurch auftretendem großem Verschleiß, der sich relativ zueinander bewegenden Teile.

Die gattungsgemäße US-3,489,395 sowie die US-2,352,117 betreffen Stützvorrichtungen, umfassend zwei in Axialrichtung gegeneinander verlagerbare Stützrohre, die über einem Gewindemechanismus zueinander ein- beziehungsweise ausfahrbar sind.

Die EP 2 223 830 betrifft eine Mutter für eine Stützvorrichtung eines Fahrzeugstützsystems.

Es ist also Aufgabe der vorliegenden Erfindung, eine Stützvorrichtung bereitzustellen, welche es ermöglicht, Schmiermittel auf einfache Weise in Kontakt zu den sich relativ zueinander bewegenden Teilen einer Stützvorrichtung zu bringen und auf diese Weise den Schmiermittelverbrauch zu senken und die Lebensdauer der Stützvorrichtung zu erhöhen.

Diese Aufgabe wird gelöst mit einer Stützvorrichtung mit den Merkmalen des Anspruchs 1. Bevorzugte Ausführungsformen ergeben sich aus den abhängigen Ansprüchen.

Erfindungsgemäß umfasst die Stützvorrichtung für Sattelstützsysteme eine Reservoireinheit, ein Stützelement und eine Trägereinheit, wobei die Reservoireinheit einen Behälterraum aufweist und an der Trägereinheit festlegbar oder festgelegt ist, wobei der Behälterraum zum Stützelement hin offen ist und im Behälterraum ein Schmiermittel vorgesehen ist, und wobei das Stützelement relativ zur Trägereinheit und zur Reservoireinheit derart entlang einer Axialrichtung verlagerbar ist, dass es in den Behälterraum einfahrbar ist, um mit dem Schmiermittel in Kontakt zu treten. Die Hauptaufgabe der Reservoireinheit ist also die Bevorratung des Schmiermittels und gleichzeitig die Anordnung des Schmiermittels derart, dass dieses in Kontakt mit dem Stützelement treten kann. Die Reservoireinheit weist einen Behälterraum auf, wobei dieser Behälterraum vorzugsweise eine Aussparung innerhalb der Reservoireinheit ist. Mit anderen Worten ist die Reservoireinheit ein Hohlkörper, wobei der Hohlraum im Inneren der Reservoireinheit den Behälterraum bildet. Weiterhin weist die Reservoireinheit an ihrem zum Stützelement hinweisenden Ende eine Öffnung auf, wodurch der Behälterraum zum Stützelement hin offen ist. Bevorzugt ist die Reservoireinheit als nach einer Seite hin offenes Rohrelement aus Kunststoff ausgeführt, wobei der verwendete Kunststoff bevorzugt resistent gegen chemische Reaktionen mit den zum Einsatz kommenden Schmiermitteln, bspw. mineralische Öle oder Fette, ist. Die an der Reservoireinheit vorgesehene Öffnung ist so ausgelegt, dass das Stützelement in die Reservoireinheit eintauchen kann. Weiterhin ist die Reservoireinheit an der Trägereinheit festgelegt oder festlegbar. Die Trägereinheit und die Reservoireinheit sind verlagerbar zum Stützelement angeordnet, wobei die Verlagerung des Stützelementes relativ zur Trägereinheit und zur Reservoireinheit erfindungsgemäß im Wesentlichen entlang einer Axialrichtung stattfindet. Bevorzugt ist die Reservoireinheit so ausgelegt, dass sie auch kleinere Verlagerungen quer zur Axialrichtung gemeinsam mit dem Stützelement durchführen kann. Insbesondere können diese Verlagrungen quer zur Axialrichtung dann auftreten, wenn die Stützvorrichtung an unebenen Flächen oder einer geneigten Ebene zum Einsatz kommt und das Stützelement sich nicht nur in Axialrichtung, sondern auch quer zur Axialrichtung relativ zur Trägereinheit verlagert, bzw. verdreht. Besonders bevorzugt ist es, dass die die Reservoireinheit mit einem Deckel versehen werden kann, welcher beim ersten Eintauchen des Stützelements in die Reservoireinheit durchbrochen wird. Insbesondere dient dieser Deckel dazu, das in der Reservoireinheit bevorzugt enthaltene Schmiermittel vor dem Entweichen oder Austrocknen zu Schützen. Alternativ zum Einwegdeckel, beispielsweise aus Aluminium, kann bevorzugt ein Schraubverschluss oder ein Schnappverschluss die Öffnung der Reservoireinheit während des Transportes und der Lagerung verschließen und bei Einbau der Reservoireinheit an der Stützvorrichtung vom Anwender entfernt werden. Das Stützelement ist bevorzugt eine Spindel, die sich vorteilhaft hauptsächlich in Axialrichtung erstreckt und sich bei Anliegen eines Drehmomentes an eines ihrer Enden um die Axialrichtung drehend verlagert. Bevorzugt weist das Stützelement bzw. die Spindel ein Außengewinde auf, welches bevorzugt dazu dient, bei Drehung des Stützelement um die Axialachse A eine Kraft in Axialrichtung an ein in das Gewinde des Stützelements eingreifendes weiteres Bauteil, wie eine Spindelmutter zu übertragen. Bevorzugt weist die Trägereinheit über geeignete Mittel auf, die in das Außengewinde des Stützelementes eingreifen, wodurch bei Drehung des Stützelementes die Trägereinheit relativ zum Stützelement in Axialrichtung verlagert wird bzw. wodurch eine Kraft zwischen Stützelement und Trägereinheit in Axialrichtung etabliert wird. Die Drehbewegung des Stützelementes wird also bevorzugt in eine translatorische bzw. Längsbewegung von Trägereinheit und der an der Trägereinheit befestigten Reservoireinheit gewandelt, wodurch die Trägereinheit und die Reservoireinheit sich relativ zum Stützelement verlagern. Während dieser Verlagerungsbewegung fährt das Stützelement in den Behälterraum der Reservoireinheit ein bzw. wieder aus diesem heraus. Ist das Stützelement in den Behälterraum eingefahren, so gelangte es in Kontakt mit dem Schmiermittel, wobei das Schmiermittel an dem Stützelement anhaftet und auch an diesem anhaftend bleibt, wenn das Stützelement wieder aus der Reservoireinheit bzw. dem Behälterraum hinausfährt, so dass das Schmiermittel auch in den Bereich, in dem die Kraftübertragung zwischen Trägereinheit und Stützelement stattfindet, gelangen kann. Auf diese Weise wird bevorzugt mit jedem Ein- bzw. Ausfuhrvorgang des Stützelementes in bzw. aus der Reservoireinheit Schmiermittel sowohl über das Stützelement als auch über die, am Stützelement eingreifenden Teile der Trägereinheit verteilt. Es ist bevorzugt, zur Unterstützung dieses Prozesses ein Schmiermittel zu verwenden, welches über eine besonders hohe Adhäsionskraft bzw. Adhäsionswirkung an für das Stützelement zu verwendenden Werkstoffen besitzt.

In einer bevorzugten Ausführungsform weist der Behälterraum der Reservoireinheit eine Querschnittsfläche quer oder senkrecht zur Axialrichtung auf, die mindestens so groß ist wie die Querschnittsfläche des Stützelements quer oder senkrecht zur Axialrichtung in dem Abschnitt des Stützelementes, der in den Behälterraum eintaucht, wobei das Verhältnis der beiden Querschnittsflächen zueinander vorzugsweise im Bereich von 1,2 bis 5, bevorzugt 1,5 bis 4 und besonders bevorzugt bei etwa 2,3 liegt. Die Querschnittsfläche quer zur Axialrichtung des Behälterraumes ist bevorzugt groß genug, um das Stützelement aufnehmen zu können. Dies bedeutet, dass die minimale Erstreckung des Behälterraumes quer zur Axialrichtung größer ist als die maximale Erstreckung des Stützelementes quer zur Axialrichtung. Das Stützelement kann dabei in Bereichen, die nicht in den Behälterraum der Reservoireinheit eintauchen, durchaus eine größere Querschnittsfläche als die Querschnittsfläche des Behälterraumes aufweisen, beispielsweise um an einem ersten Ende über Befestigungs- oder Kraftaufnahmemittel mit einer größeren Querschnittsfläche als die des Behälterraumes an der Trägereinheit festgelegt zu sein. Je größer das Flächenverhältnis ist, desto größer ist die zwischen der Innenwand des Behälterraumes und der Außenwand des Stützelementes liegende Fläche, in welcher besonders bevorzugt Schmiermittel angeordnet sein können. Da sich die Reservoireinheit bevorzugt innerhalb der Trägereinheit befindet, ist die maximale Erstreckung der Reservoireinheit quer zur Axialrichtung durch die Innengeometrie der Trägereinheit begrenzt. Die Querschnittsfläche des Behälterraumes ist also zum einen durch die Querschnittsfläche des Stützelementes quer zur Axialrichtung und zum anderen durch die Innengeometrie der Trägereinheit bzw. bei Beachtung der Wandstärke der Reservoireinheit abzüglich des doppelten Wertes der Wandstärke, begrenzt.

Ferner bevorzugt ist das Volumenverhältnis des Innenvolumens des Behälterraums zum Volumen des in den Behälterraum eingetauchten Abschnitts des vollständig in den Behälterraum eingefahrenen Stützelementes vorzugsweise 1,5 bis 3, besonders bevorzugt 2 bis 2,5. Zweckmäßigerweise ist dabei das Innenvolumen des Behälterraums größer als das Volumen des Abschnittes des Stützelementes, welcher in den Behälterraum eingetaucht ist. Die Volumendifferenz zwischen dem Innenvolumen des Behälterraums und dem Außenvolumen des in dem Behälterraum eingefahrenen Abschnitts des Stützelementes ist dabei gleichbedeutend mit dem Volumen, was für die Aufnahme von Schmiermittel zur Verfügung steht. Es ist von Vorteil, wenn das Stützelement im vollständig in den Behälterraum eingefahrenen Zustand bis an den Boden des Behälterraumes reicht. Auf diese Weise kann der Bauraum der gesamten Stützvorrichtung reduziert werden, und besonders bevorzugt verbleibt am Boden des Behälterraumes kein ungenutztes Schmiermittel, welches nicht mit dem Stützelement in Kontakt kommt. Das im Behälterraum zu speichernde Schmiermittelvolumen wird bevorzugt über eine Variierung der Querschnittsflächen des Behälterraumes und des Stützelementes quer zur Axialrichtung eingestellt.

In einer weiterhin bevorzugten Ausführungsform ist das Stützelement mit maximal einer Eintauchtiefe $h_1$ in den Behälterraum einfahrbar, wobei der Behälterraum eine maximale Erstreckung $h_2$ längs der Axialrichtung aufweist und wobei das Verhältnis der Erstreckung der maximalen Eintauchtiefe des Stützelementes zur Maximalerstreckung des Behälterraumes längs der Axialrichtung bevorzugt bei etwa 0,6 bis 1, besonders bevorzugt bei 0,7 bis 0,95 und insbesondere bevorzugt bei etwa 0,9 liegt. Je größer dieses Verhältnis ist, desto tiefer taucht das Stützelement in den Behälterraum ein. Da der Behälterraum bevorzugt zu der, dem Stützelement gegenüberliegenden Seite hin begrenzt ist, ist die theoretische Höchstgrenze diese Verhältnisses 1, denn das Stützelement kann bevorzugt nicht durch den Behälterraum hindurch geführt werden. Der bevorzugte Wert von 0,95 berücksichtigt eventuell auftretende Fertigungstoleranzen, damit eine gewisse Spaltbreite zwischen dem Boden des Behälterraums und dem Stützelement verbleibt, z.B. um Längenveränderungen durch thermische Ausdehnung oder ungenaue Fertigung ausgleichen zu können und nicht zu riskieren, dass das Stützelement mit hoher Kraft in den Boden des Behälterraumes hineingedrückt wird und eventuell Schäden an diesem hervorruft.

Vorzugsweise ist eine maximale Befüllhöhe des Schmiermittels im Behälterraum nach der Formel

$$h_{max} = h_2 - h_1 \cdot \frac{Q_1}{Q_2}$$ bestimmt bzw. festgelegt, so dass bei maxi-maler Einfahrtiefe des Stützelementes in den Behälterraum die Reservoireinheit das Herauspressen des Schmiermittels aus dem Behälterraum verhindert ist. In einem ersten, als Ausgangszustand zu bezeichnenden Zustand, ist vorgesehen, dass die Reservoireinheit mit einer bestimmten Menge Schmiermittel befüllt wird, wobei die Höhe dieses Schmiermittels im Behälterraum der Reservoireinheit als die maximale Befüllhöhe $h_{max}$ bezeichnet ist. Es ist bevorzugt, die Reservoireinheit mit einer bestimmten Menge Schmiermittel als zusätzliches bzw. als Ersatzteil anzubieten und dieses nachträglich in die Stützvorrichtung einzubringen. Da während des Einfahrvorgangs des Stützelementes in den Behälterraum Schmiermittel verdrängt wird bzw. durch das Volumen des eingefahrenen Teils des Stützelementes verdrängt wird, steigt es im Inneren des Behälterraumes zu Öffnung hin auf. Es soll dabei bevorzugt verhindert werden, dass das Schmiermittel in Bereiche außerhalb des Behälterraumes gelangen kann und es ist daher bevorzugt, nur eine begrenzte Menge des Schmiermittels im Behälterraum vorzusehen. Bei gegebener Innengeometrie des Behälterraumes ist also eine bestimmte Befüllhöhe des Schmiermittels gleichbedeutend mit einem bestimmten Befüllvolumen des Schmiermittels.

In einer bevorzugten Ausführungsform sind der Behälterraum und das Stützelement im Wesentlichen rotationssymmetrisch um die Axialrichtung ausgebildet. Im Wesentlichen rotationssymmetrisch meint in diesem Zusammenhang das durchaus nicht rotationssymmetrische Teile an den beiden Elementen Behälterraum und Stützelement vorgesehen sein können, wie z.B. ein Außengewinde am Stützelement die wesentlichen, besonders die ineinandergreifenden Teile von Stützelement und Behälterraum, sind jedoch als rotationssymmetrisch um die Axialrichtung ausgebildet. Der Behälterraum ist dabei bevorzugt ein zylinderförmiger, nach einer Seite hin offener Raum, der in die Reservoireinheit eingebracht ist. Das Stützelement ist bevorzugt eine Spindel mit einer Winde und einer im Wesentlichen zylinderförmigen Geometrie, wobei bevorzugt die in der Figur untere, bzw. zum Behälterraum hin weisende Kante des Stützelementes eine Anfasung aufweist. Bevorzugt weist der Behälterraum einen kreisrunden Querschnitt auf, wobei ferner auch ein elliptischer oder ein vieleckiger, bzw. rechteckiger Querschnitt bevorzugt ist.

In einer besonders bevorzugten Ausführungsform liegt das Verhältnis des Innendurchmessers des Behälterraumes zum Außendurchmesser des Stützelementes im Bereich von 1,1 bis 4, bevorzugt 1,4 bis 3 und insbesondere bevorzugt bei 1,53. Dieses bevorzugte Verhältnis bestimmt bei Vorliegen von kreisrunden Querschnittsgeometrien sowohl des Stützelementes als auch des Behälterraumes wiederum die Querschnittsflächen des Stützelementes des Behälterraums quer zur Axialrichtung. Indem ein bestimmtes Durchmesserverhältnis vorgesehen wird, kann bevorzugt ein bestimmtes Querschnittsverhältnis von der Querschnittsfläche des Behälterraumes zur Querschnittsfläche des Stützelementes vorgesehen werden und dazu proportional ein bestimmtes Volumenverhältnis zwischen dem Innenvolumen des Behälterraumes und dem, vom in den Behälterraum eingetauchten Teil des Stützelementes, eingenommenen Volumens eingestellt werden. Über die Wahl eines bestimmten Durchmesserverhältnisses kann also insbesondere bevorzugt direkt das Volumen bestimmt werden, welches zur Speicherung von Schmiermittel zur Verfügung steht. Bei Verwendung eines hochviskosen Schmiermittels ist es ferner bevorzugt, dass der Innendurchmesser des Behälterraumes nicht deutlich größer als der Außendurchmesser des Stützelementes ist, da zu erwarten ist, dass im ausgefahrenen Zustand des Stützelementes das Schmiermittel an der Wand des Behälterraumes haften bleibt und somit nach einer bestimmten Anzahl von Ein- und Ausfuhrzügen nicht mehr mit dem Stützelement in Kontakt kommt. Wird dagegen ein Niedrigviskoseschmiermittel verwendet, wie z.B. Öl, so kann es bevorzugt sein, den Innendurchmesser des Behälterraumes und damit das zur Verfügung stehende Schmiermittelvolumen besonders groß zu gestalten, da das Schmiermittel sich nach jedem Ausfuhrvorgang des Stützelementes wieder im Bodenbereich des Behälterraumes sammelt und so bei jedem Einfuhrvorgang des Stützelementes in den Behälterraum mit dem Stützelement in Kontakt tritt.

In einer bevorzugten Ausführungsform weist der Behälterraum an seinem dem Stützelement zugewandten Ende eine Querschnittserweiterung, insbesondere eine trichterförmige Querschnittserweiterung auf. Diese Querschnittserweiterung dient bevorzugt dazu, ein Einfahren des Stützelementes in den Behälterraum zu erleichtern. Weiterhin kann bevorzugt durch eine Querschnittserweiterung im oberen Teil des Behälterraumes erreicht werden, dass Schmiermittel, welches am Stützelement anhaftet, beim Ausfahren des Stützelementes aus dem Behälterraum im Eingriffsbereich zwischen Stützelement und Trägereinheit abgestreift wird und über die trichterförmige Querschnittserweiterung besonders günstig wieder aufgefangen und in den Behälterraum zurückgeführt wird. Bevorzugt reicht der Behälterraum bzw. die den Behälterraum umfassende Reservoireinheit bis an den Bereich der Trägereinheit hinan, welcher mit dem Stützelement zum Eingriff gelangt. Besonders bevorzugt ist an der Kontaktfläche zwischen dem Öffnungsrand der Reservoireinheit bzw. des Behälterraumes und der Trägereinheit eine Dichtung vorgesehen. Auf diese Weise ist der Behälterraum besonders vorteilhaft gegenüber dem restlichen Raum der Trägereinheit abgedichtet, wodurch z.B. Verflüchtigen oder Verschmutzen des Schmiermittels verhindert wird.

Erfindungsgemäß ist die Trägereinheit in ihrem von dem Stützelement weg weisenden Ende geschlossen und weist einen Endabschnitt auf, wobei in dem Endabschnitt eine Aussparung vorgesehen ist, in welcher die Reservoireinheit entlang der Axialrichtung ein- bzw. durchführbar ist und wobei die Aussparung Eingriffsmittel aufweist, an welchen ein Befestigungsbereich der Reservoireinheit zum Eingriff bringbar ist, um die Reservoireinheit an der Trägereinheit festzulegen. Bevorzugt ist die Trägereinheit ein Hohlkörper, der zu einer Seite hin geschlossen ist, wobei der die Trägereinheit abschließende Endabschnitt bevorzugt eine Erstreckung im Wesentlichen quer zur Axialrichtung aufweist. In diesem Endabschnitt ist eine Aussparung eingebracht, welche groß genug ist, um die Reservoireinheit in die Trägereinheit ein- bzw. durchzuführen. Bevorzugt sind an der Aussparung Eingriffsmittel, wie z.B. ein Innengewinde, vorgesehen, in welche ein Befestigungsbereich an der Reservoireinheit eingreifen kann. Besonders bevorzugt wird dabei ein Außengewinde im Befestigungsbereich der Reservoireinheit an einem Innengewinde in der Aussparung des Endabschnittes zum Eingriff gebracht und so die Reservoireinheit an der Trägereinheit festgelegt. Es kann bevorzugt sein, an der Reservoireinheit geeignete Mittel vorzusehen, um beispielsweise ein Drehmoment an die Reservoireinheit übertragen zu können. Bevorzugt kann beispielsweise an der Stirnfläche der Reservoireinheit eine innensechskantförmige Aussparung vorgesehen sein, in welchen ein geeignetes Werkzeug eingesetzt werden kann, um ein Drehmoment auf die Reservoireinheit zu übertragen. In einer bevorzugten Ausführungsform dient der Endabschnitt der Trägereinheit gleichzeitig als Fuß, mit welchem die Stützvorrichtung auf den Boden gestellt wird. Es ist daher bevorzugt, dass die Reservoireinheit in den Endabschnitt, bzw. in die Aussparung des Endabschnittes hineinversenkt werden kann, um zu verhindern, dass Stützlasten, die auf die Trägereinheit bzw. die gesamte Stützvorrichtung in Axialrichtung übertragen werden, die Reservoireinheit beschädigen. In einer weiteren bevorzugten Ausführungsform kann auch ein Bajonettverschluss als Eingriffsmittel zwischen der Aussparung im Endabschnitt der Trägereinheit und der Reservoireinheit verwendet werden. Weitere bevorzugte Eingriffsmittel, die zwischen der Reservoireinheit und dem Endabschnitt zum Einsatz kommen können, sind beispielsweise ein Clips- bzw. Federverschluss, welcher eine formschlüssige Verbindung herstellt bzw. ein Sicherungsring, der in eine dafür vorgesehene Nut in der Aussparung des Endabschnittes eingreift und so die Reservoireinheit gegen Verlagerung in Axialrichtung relativ zur Trägereinheit sichert. In besonders bevorzugter Weise kann die Reservoireinheit im Bereich der trichterförmigen Querschnittserweiterung einen sternförmigen, bzw. faltenförmigen Querschnitt quer zur Axialrichtung aufweisen, wobei in diesem Bereich die Wand der Reservoireinheit bevorzugt leicht elastisch verformbar ist. Der Vorteil dieser Ausführung liegt darin, dass die Reservoireinheit leichter in die Aussparung an der Trägereinheit einführbar ist, indem der Anwender den maximalen Durchmesser der trichterförmigen Querschnittserweiterung vor dem Einführen durch elastische Verformung verringert und die Reservoireinheit anschließend durch die Aussparung einführen kann, auch wenn der Durchmesser der Aussparung kleiner ist als der maximale Durchmesser des trichterförmigen Abschnittes der Reservoireinheit im entspannten Zustand.

In einer bevorzugten Ausführungsform weist die Trägereinheit einen sich im Wesentlichen längs der Axialrichtung erstreckenden Hohlkörperabschnitt auf, wobei der Hohlkörperabschnitt eine Aussparung quer zur Axialrichtung aufweist, durch die eine Versorgungsleitung bis an eine an der Reservoireinheit quer zur Axialrichtung vorgesehene Aussparung führbar ist, so dass dem Behälterraum Schmiermittel quer zur Axialrichtung zuführbar ist. In dieser bevorzugten Ausführungsform wird die Reservoireinheit also nicht durch eine Aussparung im Endabschnitt der Trägereinheit in die Trägereinheit eingeführt, sondern wird beispielsweise vor der Montage der Stützvorrichtung bereits in die Trägereinheit eingesetzt und anschließend mit einer Versorgungsleitung mit Schmiermittel versorgt. Die Versorgungsleitung wird bevorzugt durch eine Aussparung in der Mantelfläche der Trägereinheit geführt und reicht bis hin zu einer Aussparung, welche in die Reservoireinheit eingebracht ist. Besonders bevorzugt weist die Aussparung in der Reservoireinheit geeignete Mittel zum Festlegen der Versorgungsleitung auf, beispielsweise ein Innengewinde in welches ein an der Versorgungsleitung vorgesehenes Außengewinde eingreifen kann und auf diese Weise die Versorgungsleitung an der Reservoireinheit festlegt. Vorteilhaft ist die Zuführung von Schmiermittel quer zur Axialrichtung besonders dann, wenn es nicht gewünscht ist, eine Aussparung bzw. eine Bohrung in den Endabschnitt der Trägereinheit einzubringen, um durch diese die Reservoireinheit in die Trägereinheit einzuführen. Dies kann besonders dann der Fall sein, wenn im Endabschnitt der Trägereinheit Mittel zur Festlegung eines an die Stützvorrichtung angelagerten Fußes vorgesehen sind, welche nicht durch eine Aussparung durchbrochen werden sollen, um einen günstigen Kraftfluss vom Fuß hin zur Stützvorrichtung zu ermöglichen. Das Einbringen von Schmiermittel in die Reservoireinheit bzw. den Behälterraum der Reservoireinheit seitlich, also quer zur Axialrichtung über die Mantelfläche der Trägereinheit bzw. die Mantelfläche der Reservoireinheit ist im Übrigen dann vorteilhaft, wenn die Stützvorrichtung auf dem Boden steht, einen Sattelauflieger abstützt und folglich der Endabschnitt der Trägereinheit nicht erreicht werden kann. Bevorzugt ist an der Versorgungsleitung ein Ventil oder ein manuell bedienbarer Verschluss vorgesehen, um zu verhindern, dass Schmiermittel aus der Reservoireinheit hinausgelangt. An ihrem von der Reservoireinheit wegweisenden Ende der Versorgungsleitung weist diese besonders bevorzugt eine Geometrie auf, an welche eine beispielsweise Fettspritze angesetzt werden kann. Es kann weiterhin bevorzugt sein, eine oder eine Vielzahl weiterer Versorgungsleitungen in der Nähe der Öffnung des Behälterraumes vorzusehen, wobei mittels dieser Versorgungsleitung der Füllstand an Schmiermittel in der Behältereinheit kontrolliert werden kann.

Vorzugsweise weist das Stützelement eine Erstreckung im Wesentlichen längs der Axialrichtung auf und ist in einem ersten Befestigungsbereich gegen Verlagerung in Axialrichtung gesichert und drehbar gelagert. Bevorzugt ist das Stützelement mit seinem von der Reservoireinheit wegweisenden Ende an einem weiteren Bauteil bzw. einer weiteren Einheit festgelegt bzw. drehbar gelagert, wobei diese Baueinheit insbesondere ein Außenrohr einer Stützvorrichtung ist, welches an dem Sattelauflieger festgelegt sein kann. Die Trägereinheit der Stützvorrichtung fungiert dabei als Innenrohr, welches teleskopartig in das Außenrohr hinein versenkt oder aus diesem ausgefahren werden soll. Dabei dient das Stützelement zum Aufbringen einer Kraft zwischen Trägereinheit und dem Außenrohr. Bevorzugt ist am Außenrohr weiterhin ein Getriebe vorgesehen, mit welchem eine Drehbewegung, beispielsweise eine Bewegung einer Kurbel durch den Anwender, über ein Getriebe, bzw. verschiedene Zahnräder in eine Drehbewegung des Stützelementes um die Axialrichtung gewandelt werden kann, wobei gleichzeitig ein Drehmoment auf das Stützelement übertragen wird. Bevorzugt weist das Außenrohr der Stützvorrichtung geeignete Führungsmittel auf, welche die Trägereinheit während der Verlagerung relativ zum Außenrohr längs der Axialrichtung führen und gegen Verdrehung bzw. Verwindung relativ zum Außenrohr sichern.

In einer besonders bevorzugten Ausführungsform weist die Trägereinheit einen ersten Trägerbereich mit einer Aussparung in Axialrichtung auf, wobei der erste Trägerbereich an der Trägereinheit festgelegt ist, wobei das Stützelement in die Aussparung des ersten Trägerbereiches einführbar ist und wobei das Stützelement und die Aussparung des ersten Trägerbereiches Eingriffsmittel aufweisen, so dass eine Kraft in Axialrichtung zwischen dem ersten Trägerbereich und dem Stützelement übertragbar ist. Bevorzugt ist der erste Trägerbereich eine Platte oder Scheibe, die im Inneren der Trägereinheit angeordnet und beispielsweise mittels einer stoff-, kraft- oder formschlüssigen Verbindung an der Trägereinheit festgelegt ist. Der Trägerbereich dient in erster Linie dazu, eine Kraft in Axialrichtung vom Stützelement auf die Trägereinheit zu übertragen. Es kann dabei bevorzugt sein, den ersten Trägerbereich mittels zweier Sicherungsringe, die in Nuten an der Innenseite der Trägereinheit eingreifen, gegen Verlagerung in Axialrichtung relativ zur Trägereinheit zu sichern. Vorteilhaft bei dieser Ausführungsform ist, dass der erste Trägerbereich mittels einer lösbaren Verbindung mit der Trägereinheit verbunden ist, wobei dies besonders dann von Vorteil ist, wenn die Reservoireinheit nicht von unten über den Endabschnitt der Trägereinheit in die Trägereinheit eingefügt werden kann, sondern von der dem Endabschnitt gegenüberliegenden Seite in die Trägereinheit eingeführt werden muss, wobei die Reservoireinheit am Trägerbereich vorbei gelangen muss. In weiteren bevorzugten Ausführungsformen kann der erste Trägerbereich aber auch mittels einer Schweißverbindung an der Trägereinheit festgelegt sein oder mittels geeigneter Gewinde in die Trägereinheit eingeschraubt werden. Um eine Kraftübertragung vom Stützelement auf den ersten Trägerbereich zu ermöglichen, weist der erste Trägerbereich eine Aussparung bevorzugt mit einem Gewinde auf. Die Gewindepaarung des Innengewindes an der Aussparung des ersten Trägerbereiches mit dem Außengewinde am Stützelement ist dabei bevorzugt selbsttragend auszulegen, so dass, wenn die Stützvorrichtung eine Stützlast überträgt und vom Anwender kein Drehmoment auf das Stützelement übertragen wird, dieses sich nicht selbsttätig verdreht. Bevorzugt wird so ein selbsttätiges, ungewolltes Einfahren des Stützelement bzw. Einfahren der Stützvorrichtung verhindert. Mit anderen Worten überwiegt bei dieser Gewindepaarung die Reibungskraft im Gewinde bei Anliegen einer Stützlast, die dem Gewindegang folgende Kraft des Gewindes. In einer besonders bevorzugten und besonders einfachen Ausführungsform ist der erste Trägerbereich eine in die Trägereinheit eingeschweißte Mutter mit einem Innengewinde. In besonders bevorzugter Weise ist der erste Trägerbereich gegen Verlagerung in Axialrichtung gesichert und besitzt gleichzeitig einen Freiheitsgrad für Pendelbewegungen relativ zur Trägereinheit. Dabei kann ein Federmechanismus eingesetzt werden, um den ersten Trägerbereich mittels einer Rückstellkraft in eine Ruhelage quer zur Axialrichtung zu stellen, gleichzeitig aber Pendelbewegungen des Stützelementes bzw. des damit verbundenen Trägerbereiches relativ zur Trägereinheit zu ermöglichen. Diese Pendelbewegungen können besonders dann auftreten, wenn die Stützvorrichtung den Sattelauflieger im unwegsamen bzw. unebenen Gelände abstützt und dabei nicht in einem rechten Winkel zum Boden angeordnet ist.

Weitere Vorteile, Merkmale und Besonderheiten der Erfindung ergeben sich aus der nachfolgenden Beschreibung vorteilhafter Ausführungsformen der erfindungsgemäßen Stützvorrichtung. Einzelne Merkmale verschiedener Ausführungsformen der Erfindung können dabei im Rahmen der Erfindung miteinander kombiniert werden. Es zeigen:

Fig. 1      eine erste Schnittansicht einer bevorzugten Ausführungsform der erfindungsgemäßen Stützvorrichtung,

Fig. 2      eine weitere Schnittansicht einer bevorzugten Ausführungsform der erfindungsgemäßen Stützvorrichtung,

Fig. 3      eine Schnittansicht in Axialrichtung einer weiteren bevorzugten Ausführungsform der erfindungsgemäßen Stützvorrichtung, und

Fig. 4 eine Schnittansicht einer bevorzugten Ausführungsform der erfindungsgemäßen Stützvorrichtung mit seitlich eingebrachter Versorgungsleitung.

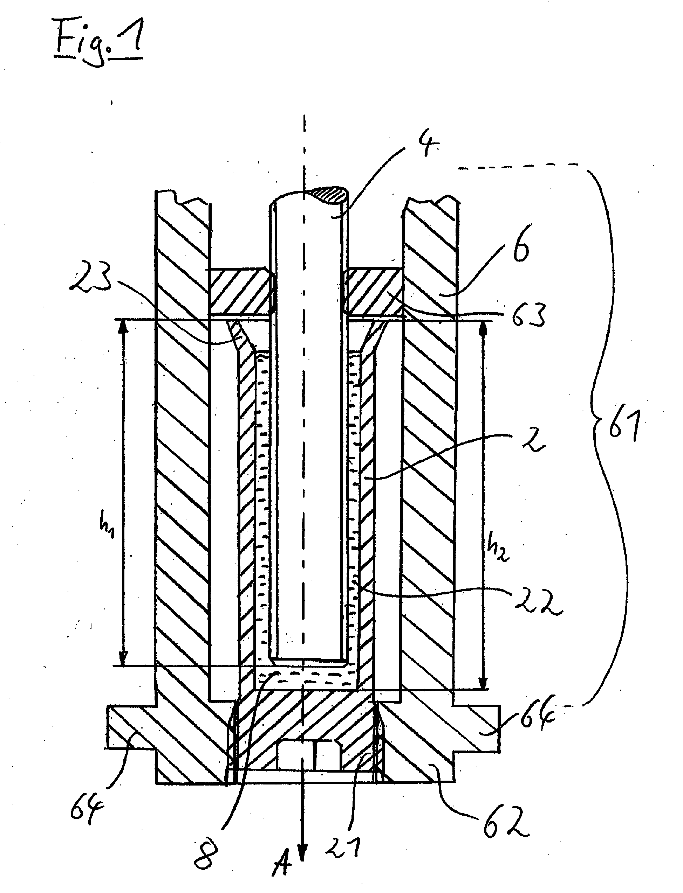

Die in Fig. 1 gezeigte bevorzugte Ausführungsform der erfindungsgemäßen Stützvorrichtung weist eine Trägereinheit 6, ein Stützelement 4 und eine Reservoireinheit 2 auf. Die Trägereinheit 6 ist dabei im Wesentlichen hohlkörperförmig ausgebildet und weist an ihrem unteren Ende einen Endabschnitt 62 auf. In diesem Endabschnitt 62 ist eine Aussparung mit einem Innengewinde vorgesehen, wobei die Reservoireinheit 2 bevorzugt durch diese Aussparung hindurch geführt und in einem Befestigungsabschnitt 21 an dem Innengewinde des Endabschnittes 62 festgelegt wird. Die Reservoireinheit weist einen Behälterraum 22 auf, welcher mit einem Schmiermittel 8 gefüllt ist. Die Trägereinheit 6 weist, in der Figur oben gezeigt, einen ersten Trägerbereich 63 auf, welcher über ein Innengewinde, eine kraftschlüssige Verbindung mit einem an dem Stützelement 4 vorgesehenen Außengewinde eingeht. Der erste Trägerbereich 63 - bspw. eine Spindelmutter - der Trägereinheit 6 kann bevorzugt einstückig mit der Trägereinheit 6 ausgeführt sein. In einer weiteren bevorzugten Ausführungsform kann der erste Trägerbereich 63 auch mittels einer Schweißverbindung oder mittels beispielsweise einer Anordnung von Sicherungsringe an der Trägereinheit 6 festgelegt sein. Bevorzugt ist, wie in der Figur gezeigt, dass die Reservoireinheit 2 eine Erstreckung längs der Axialrichtung A aufweist und an ihrem oberen Ende an den ersten Trägerbereich 63 grenzt und an ihrem unteren Ende im Endbereich 62 der Trägereinheit 6 festgelegt ist. Der Behälterraum 22, welcher sich im Inneren der Reservoireinheit 2 befindet, besitzt bevorzugt eine Erstreckung $h_2$ in Axialrichtung. Das Stützelement 4 ragt bevorzugt mit einer Weglänge $h_1$ in den Behälterraum 22 hinein. Dabei ist $h_1$ bevorzugt die maximale Weglänge, also der maximale Betrag, mit welchem das Stützelement 4 in den Behälterraum 22 hineinragt. Das Verhältnis von $h_1$ zu $h_2$ ist bevorzugt kleiner/gleich 1 und besonders bevorzugt 0,9. Auf diese Weise wird gewährleistet, dass am Boden des Behälterraumes 22 kein unbenutztes Schmiermittel 8 verbleibt, sondern dass möglichst das gesamte, im Behälterraum 22 angeordnete Schmiermittel 8 mit dem Stützelement 4 in Kontakt gelangt. An der Außenseite der Trägereinheit 6 sind bevorzugt zweite Trägerbereiche 64, bzw. Aufnahmestutzen zur Aufnahme z.B. eines an der Trägereinheit 6 gelagerten Fußes vorgesehen. Diese zweiten Trägerbereiche 64, bzw. Aufnahmestutzen weisen bevorzugt einen zylinderförmigen Querschnitt auf, wobei ebenfalls vieleckige oder kugelförmige Geometrien vorteilhaft sein können.

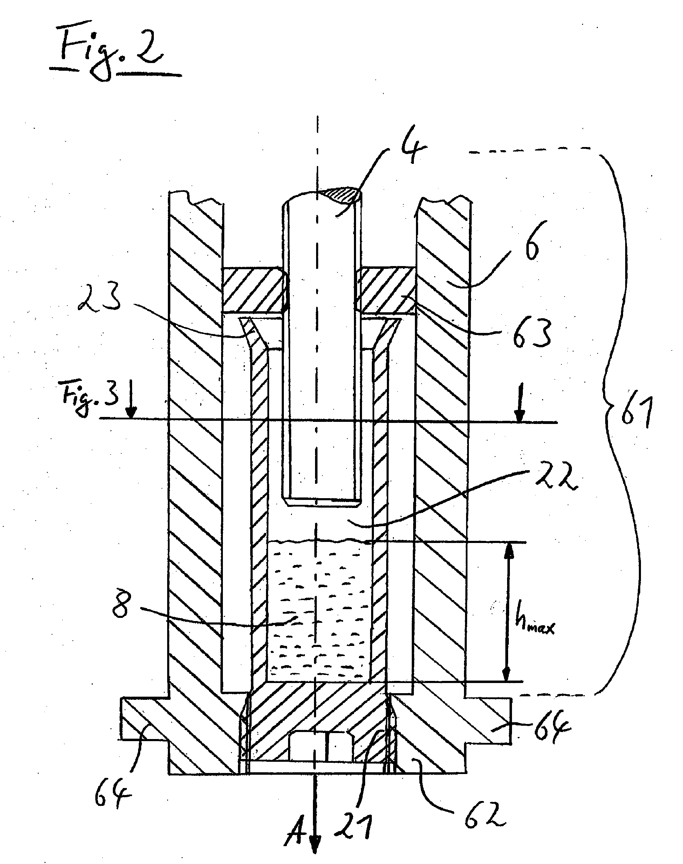

Fig. 2 zeigt eine Schnittansicht einer bevorzugten Ausführungsform der erfindungsgemäßen Stützvorrichtung, wobei das Stützelement 4 nur teilweise in den Behälterraum 22 eingefahren ist. In diesem Betriebszustand ist das gesamte Schmiermittel 8 am Boden des Behälterraumes 22 gesammelt, wobei die Reservoireinheit 2 bevorzugt in diesem Zustand für den Einbau in die Trägereinheit 6 bereitgestellt wird. Dabei ist die maximale Befüllhöhe des Schmiermittels $h_{max}$ zu erkennen, welche wiederum für ein bestimmtes Befüllvolumen an Schmiermittel 8 im Behälterraum 22 steht. Dieses maximale Befüllvolumen des Schmiermittels 8 ist so zu wählen, dass bei vollständig eingefahrenem Stützelement 4 in Behälterraum 22 und der einsetzenden Verdrängung des Schmiermittels 8 durch das Stützelement 4 das Schmiermittel nicht über den oberen Rand des Behälterraumes 22 hinaus gepresst wird und in die umliegenden Bereiche innerhalb der Trägereinheit 6 gelangt. Es kann so eine Verschwendung von Schmiermittel 8 verhindert werden und der Schmiermittelbedarf insgesamt gesenkt werden. Die maximale Befüllhöhe $h_{max}$ kann bevorzugt mit der Formel $h_{max} = h_2 - h_1 \cdot \dfrac{Q_1}{Q_2}$ und das daraus direkt resultierende maximale Befüllvolumen mit der Formel $V_{max} = Q_2 \cdot h_2 - Q_1 \cdot h_1$ berechnet werden. Es ist an dieser Stelle zu beachten, dass bei Vorhandensein eines bevorzugten Außengewindes an dem Stützelement 4 für $Q_1$ bzw. $d_1$ ein Mittelwert verwendet wird, der die Gewindetiefe berücksichtigt.

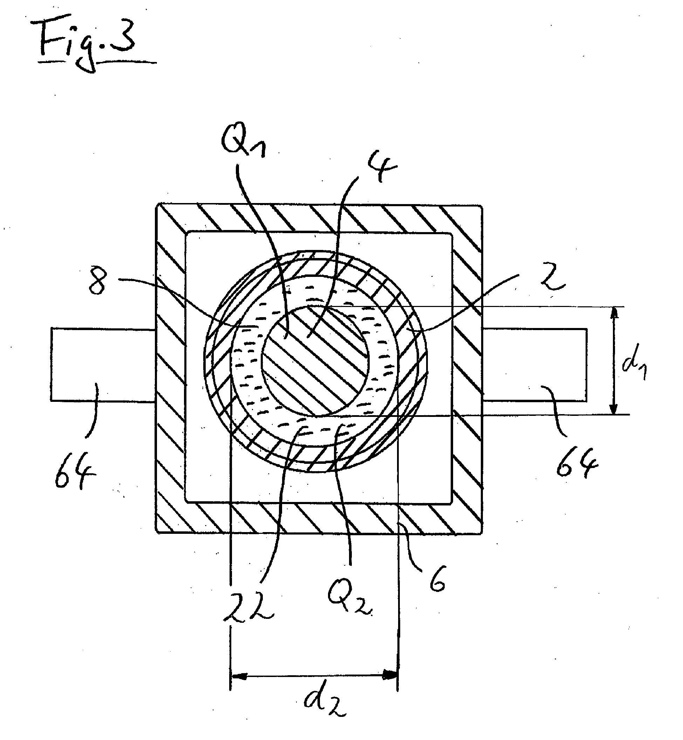

Figur 3 zeigt die bereits in Figur 2 angedeutete Schnittansicht in Axialrichtung einer bevorzugten Ausführungsform der erfindungsgemäßen Stützvorrichtung. Dabei ist zunächst zu erkennen, dass in einer bevorzugten Ausführungsform die Trägereinheit 6 einen rechteckigen, hohlkörperförmigen Querschnitt aufweist. In weiteren bevorzugten Ausführungsformen kann die Trägereinheit 6 bevorzugt auch kreisförmig, oval oder vieleckig ausgelegt sein. Weiterhin weisen die Reservoireinheit 2 bzw. der Behälterraum 22 und das Stützelement 4 jeweils kreisförmige Querschnitte auf. Die Außengeometrie der Reservoireinheit 2 kann bevorzugt auch eine vieleckige, rechteckige oder ovale Form aufweisen. Bevorzugt weist das Stützelement 4 eine Querschnittsfläche $Q_1$ und der Behälterraum 22 eine Querschnittsfläche $Q_2$ auf, wobei der aus der Differenz dieser beiden Flächen gebildete Ringraum mit dem Schmiermittel 8 gefüllt ist. Bevorzugt ist $d_1$ der Durchmesser des Stützelements 4 und $d_2$ der Innendurchmesser des Behälterraumes 22. Bei durch die Konstruktion der Stützvorrichtung vorgegebenen konstanten Werten von $h_1$ und $h_2$ ist das Volumenverhältnis $V_2$ zu $V_1$ direkt proportional zum Quadrat des Durchmesserverhältnisses $d_1$ zu $d_2$. Bevorzugt ist $V_2$ das Innenvolumen des Behälterraumes 22 und $V_1$ das Volumen des vollständig in den Behälterraum 22 eingefahrenen Abschnitts des Stützelements 4.

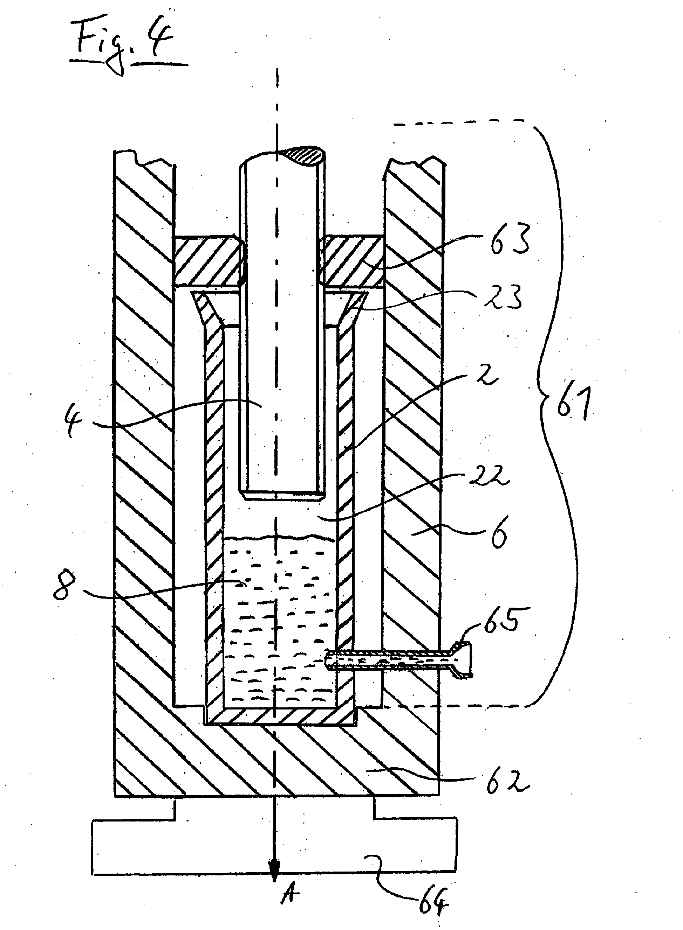

Figur 4 zeigt eine weitere bevorzugte Ausführungsform der erfindungsgemäßen Stützvorrichtung, wobei der Endabschnitt 62 der Trägereinheit 6 keine Aussparung aufweist. Bevorzugt befinden sich der zweite Aufnahmebereich 64 nicht an der Mantelfläche der Trägereinheit 6, sondern an der Unterseite bzw. Stirnseite der Trägereinheit 6 bzw. dem Endabschnitt 62. Die Reservoireinheit 2 wird bevorzugt nicht durch die Aussparung im Endabschnitt 62 in die Trägereinheit 6 eingeführt, sondern von in der Figur oben in die Trägereinheit 6 eingesetzt, wobei nach dem Einsetzen der Reservoireinheit 2 der erste Trägerbereich 63 an der Trägereinheit 6 festgelegt wird. Die Zufuhr an Schmiermittel 8 in den Behälterraum 22 geschieht bei dieser bevorzugten Ausführungsform über eine Versorgungsleitung 65, welche durch eine Aussparung in der Mantelfläche der Trägereinheit 6 gesteckt wird und über eine Aussparung in der Mantelfläche der Reservoireinheit 2 bis in den Behälterraum 22 reicht. Nicht in der Figur gezeigt ist, dass die Versorgungsleitung 65 bevorzugt ein Außengewinde aufweist, welches in dafür vorgesehene Gewinde an der Trägereinheit 6 und/oder der Reservoireinheit 2 eingreift und so die Versorgungsleitung 65 gegen Verlagerung relativ zur Trägereinheit 6 bzw. Reservoireinheit 2 sichert. An ihrem außen liegenden Ende weist die Versorgungsleitung 65 geeignete Geometrien auf, welche beispielsweise dafür dienen, eine Fettspritze oder eine ähnliche Zuführungseinrichtung für Schmiermittel 8 aufzunehmen. Nicht in der Figur gezeigt ist, dass beispielsweise eine Ventilvorrichtung innerhalb der Versorgungsleitung 65 angeordnet sein kann, welche verhindert, dass Schmiermittel aus dem Behälterraum 22 in die Umwelt gelangen kann. Bevorzugt ist die Reservoireinheit zwischen dem Endabschnitt 62 der Trägereinheit 6 und dem ersten Trägerbereich 63 eingeklemmt und dabei gegen Verlagerung in Axialrichtung A und mittels einer dafür vorgesehenen Aussparung im Endabschnitt 62 auch gegen Verlagerung quer zur Axialrichtung A gesichert. Nicht in der Figur gezeigt ist, dass beispielsweise an der Oberkante der Reservoireinheit 2 eine Dichtung vorgesehen sein kann, die den Behälterraum 22 gegen den ersten Trägerbereich 63 abdichtet. Nicht in der Figur gezeigt ist eine bevorzugte Ausführung, wobei der zweite Trägerbereich 64 an der Unterseite der Trägereinheit 6 angeordnet ist, wobei die Trägereinheit 6 an ihrer Unterseite eine Aussparung mit geeigneten Mitteln zur Festlegung des zweiten Trägerbereiches 64 und zum Einführen der Reservoireinheit 2 von unten in die Trägereinheit 6 aufweist. Bevorzugt kann zunächst die Reservoireinheit 2 durch die Aussparung eingeführt und anschließend der zweite Trägerbereich 64 an der Trägereinheit 6 festgelegt werden. Die Aussparung an der Unterseite der Trägereinheit kann bevorzugt ein Innengewinde aufweisen, in welches ein am zweiten Trägerbereich vorgesehenes Außenwinde eingreifen kann.

**Bezugszeichenliste**

2 -     Reservoireinheit

4 -     Stützelement
6 -     Trägereinheit
8 -     Schmiermittel
21 -     Befestigungsbereich
22 -     Behälterraum
23 -     Querschnittserweiterung
61 -     Hohlkörperabschnitt
62 -     Endabschnitt
63 -     erster Trägerbereich
64 -     zweiter Trägerbereich
65 -     Versorgungsleitung
A -     Axialrichtung
$h_1$ -     Eintauchtiefe des Stützelements
$h_2$ -     max. Erstreckung Behälterraum
$d_1$ -     Außendurchmesser Stützelement
$d_2$ -     Innendurchmesser Reservoireinheit
$Q_1$ -     Querschnittsfläche Stützelement
$Q_2$ -     Querschnittsfläche Behälterraum

**Patentansprüche**

1. Stützvorrichtung für Sattelstützsysteme, umfassend eine Reservoireinheit (2), ein Stützelement (4) und eine Trägereinheit (6),
   wobei die Reservoireinheit (2) einen Behälterraum (22) aufweist und an der Trägereinheit (6) festlegbar oder festgelegt ist,
   wobei der Behälterraum (22) zum Stützelement (4) hin offen ist und im Behälterraum (22) ein Schmiermittel (8) vorgesehen ist, und
   wobei das Stützelement (4) relativ zur Trägereinheit (6) und zur Reservoireinheit (2) derart entlang einer Axialrichtung (A) verlagerbar ist, dass es in den Behälterraum (22) einfahrbar ist, um mit dem Schmiermittel (8) in Kontakt zu treten, **dadurch gekennzeichnet, dass**
   die Trägereinheit (6) in ihrem von dem Stützelement (4) weg weisenden Ende durch Endabschnitt (62) geschlossen ist,
   wobei in dem Endabschnitt (62) eine Aussparung vorgesehen ist, in welche die Reservoireinheit (2) entlang der Axialrichtung (A) ein- bzw. durchführbar ist, und
   wobei die Aussparung Eingriffsmittel aufweist, an welchen ein Befestigungsbereich (21) der Reservoireinheit (2) zum Eingriff bringbar ist, um die Reservoireinheit (2) an der Trägereinheit (6) festzulegen.

2. Stützvorrichtung nach Anspruch 1,
   wobei der Behälterraum (22) der Reservoireinheit (2) eine Querschnittsfläche ($Q_2$) quer zur Axialrichtung (A) aufweist, die mindestens so groß ist wie die Querschnittsfläche ($Q_1$) des Stützelements (4) quer zur Axialrichtung (A) in dem Abschnitt des Stützelements (4) der in den Behälterraum (22) eintaucht, wobei das Verhältnis $Q_2 / Q_1$ vorzugsweise im Bereich von 1,2 bis 5, bevorzugt 1,5 bis 4, besonders bevorzugt bei etwa 2,3 liegt.

3. Stützvorrichtung nach einem der vorhergehenden Ansprüche,
wobei das Volumenverhältnis (dV) des Innenvolumens ($V_2$) des Behälterraums (22) zum Volumen ($V_1$) des in den Behälterraum (22) eingetauchten Abschnitts des vollständig in den Behälterraum (22) eingefahrenen Stützelements (4) vorzugsweise 1,5 bis 3, besonders bevorzugt 2 bis 2,5 ist.

4. Stützvorrichtung nach einem der vorhergehenden Ansprüche,
wobei das Stützelement (4) mit maximal einer Eintauchtiefe ($h_1$) in den Behälterraum (22) einfahrbar ist,
wobei der Behälterraum (22) eine maximale Erstreckung ($h_2$) längs der Axialrichtung (A) aufweist, und wobei das Verhältnis von $h_1$ zu $h_2$ bevorzugt bei etwa 0,6 bis 1, besonders bevorzugt bei 0,7 bis 0,95 und insbesondere bevorzugt bei 0,9 liegt.

5. Stützvorrichtung nach den Ansprüchen 2 und 4,
wobei eine maximale Befüllhöhe ($h_{max}$) des Schmiermittels (8) im Behälterraum (22) nach der Formel $h_{max} = h_2 - h_1 \cdot \dfrac{Q_1}{Q_2}$ festgelegt ist, so

dass bei maximaler Einfahrtiefe des Stützelements (4) in den Behälterraum (22) der Reservoireinheit (2) das Herauspressen des Schmiermittels (8) aus dem Behälterraum (22) verhindert ist.

6. Stützvorrichtung nach einem der vorhergehenden Ansprüche,
wobei der Behälterraum (22) und das Stützelement (4) im Wesentlichen rotationssymmetrisch um die Axialrichtung (A) ausgebildet sind.

7. Stützvorrichtung nach Anspruch 6,
wobei das Verhältnis des Innendurchmessers ($d_2$) des Behälterraumes (22) zum Außendurchmesser ($d_1$) des Stützelements (4) im Bereich von 1,1 bis 4, bevorzugt 1,4 bis 3 liegt und insbesondere bevorzugt 1,53 ist.

8. Stützvorrichtung nach einem der vorhergehenden Ansprüche,
wobei der Behälterraum (22) an seinem, dem Stützelement (4) zugewandten Ende eine Querschnittserweiterung (23), insbesondere eine trichterförmige Querschnittserweiterung, aufweist.

9. Stützvorrichtung nach einem der vorhergehenden Ansprüche,
wobei die Trägereinheit (6) einen sich im Wesentlichen längs der Axialrichtung (A) erstreckenden Hohlkörperabschnitt (61) aufweist,

wobei der Hohlkörperabschnitt (61) eine Aussparung quer zur Axialrichtung (A) aufweist, durch die eine Versorgungsleitung (65) bis an eine an der Reservoireinheit (2) quer zur Axialrichtung vorgesehene Aussparung führbar ist, so dass dem Behälterraum (22) Schmiermittel (8) quer zur Axialrichtung zuführbar ist.

**Claims**

1. Support device for semi-trailers supporting systems, comprising a reservoir unit (2), a support element (4) and a carrier unit (6),
wherein the reservoir unit (2) has a container room (22) and may be or is fixed to the carrier unit (6),
wherein the container room (22) is open towards the support element (4) and a lubricant (8) is provided in the container room (22), and
wherein the support element (4) is displaceable relative to the carrier unit (6) and to the reservoir unit (2) along an axial direction (A) such that it is retractable into the container room (22) so as to come into contact with the lubricant (8), **characterized in that** the carrier unit (6) is closed by an end section (62) at the end thereof facing away from the support element (4),
wherein in the end section (62) there is provided a cavity, into which the reservoir unit (2) may be inserted or through which the reservoir unit (2) may pass along the axial direction (A), and
wherein the cavity has engagement means, at which a fastening region (21) of the reservoir unit (2) may engage so as to fix the reservoir unit (2) to the carrier unit (6).

2. The support device of claim 1,
wherein the container room (22) of the reservoir unit (2) has a cross-sectional surface ($Q_2$) transverse to the axial direction (A), which surface is at least as large as the cross-sectional surface ($Q_1$) of the support element (4) transverse to the axial direction (A) in that section of the support element (4), which is immersed into the container room (22),
wherein the relationship $Q_2 / Q_1$ preferably is in a range of 1.2 to 5, more preferably 1.5 to 4, and most preferably about 2.3.

3. The support device of any one of the preceding claims,
wherein the volume relationship (dV) of the inner volume ($V_2$) of the container room (22) to the volume ($V_1$) of the section of the support element (4) completely retracted into the container room (22), which section is immersed into the container room (22), is preferably 1.5 to 3, particularly preferably 2 to 2.5.

4. The support device of any one of the preceding claims,
wherein the support element (4) may be retracted into the container room (22) with a maximum of an immersion depth ($h_1$),
wherein the container room (22) has a maximum extension ($h_2$) along the axial direction (A), and
wherein the relationship of $h_1$ to $h_2$ is preferably 0.6 to 1, particularly preferably 0.7 to 0.95, and most preferably it is 0.9.

5. The support device of claims 2 and 4,
wherein a maximum filling height ($h_{max}$) of the lubricant (8) in the container room (22) is defined according to the formula $h_{max} = h_2 - h_1 \cdot \dfrac{Q_1}{Q_2}$ so that in the case of the maximum retraction depth of the support element (4) into the container room (22) of the reservoir unit (2) it is prevented that lubricant (8) is pressed out of the container room (22).

6. The support device of any one of the preceding claims,
wherein the container room (22) and the support element (4) are formed essentially rotation-symmetric about the axial direction (A).

7. The support device of claim 6,
wherein the relationship of the inner diameter ($d_2$) of the container room (22) to the outer diameter ($d_1$) of the support element (4) is in a range of 1.1 to 4, preferably 1.4 to 3, and particularly preferably it is 1.53.

8. The support device of any one of the preceding claims,
wherein the container room (22) at the end thereof facing the support element (4) has an enlargement of cross-section, in particular a funnel-shaped enlargement of cross-section.

9. The support device of any one of the preceding claims,
wherein the carrier unit (6) has a hollow body section (61) extending essentially along the axial direction (A),
wherein the hollow body section (61) has a cavity transverse to the axial direction (A), through which a supply line (65) may be guided up to a cavity provided on the reservoir unit (2) transverse to the axial direction, so that a lubricant (8) may be supplied to the container room (22) transverse to the axial direction.

**Revendications**

1. Dispositif de soutien pour des systèmes de soutien de semi-remorques, comprenant une unité à réservoir (2), un élément de soutien (4) et une unité portante (6),
dans lequel l'unité à réservoir (2) comprend une chambre de récipient (22) et est fixée ou susceptible d'être fixée sur l'unité portante (6),
dans lequel la chambre de récipient (22) est ouverte vers l'élément de soutien (4) et il est prévu un agent lubrifiant (8) dans la chambre de récipient (22), et
dans lequel l'élément de soutien (4) est déplaçable par rapport à l'unité portante (6) et à l'unité à réservoir (2) le long d'une direction axiale (A) de telle façon qu'il est rétractable dans la chambre de récipient (22) afin de venir en contact avec l'agent lubrifiant (8), **caractérisé en ce que** l'unité portante (6) est fermée par une portion terminale (62) à son extrémité détournée de l'élément de soutien (4),
dans lequel il est prévu une échancrure dans la portion terminale (62), échancrure dans laquelle l'unité à réservoir (2) est susceptible d'être introduite ou traversée le long de la direction axiale (A), et
dans lequel l'échancrure comprend des moyens d'engagement contre lesquels une zone de fixation (21) de l'unité à réservoir (2) peut être amenée en engagement afin d'immobiliser l'unité à réservoir (2) sur l'unité portante (6).

2. Dispositif de soutien selon la revendication 1,
dans lequel la chambre de récipient (22) de l'unité à réservoir (2) présente une surface de section transversale ($Q_2$) perpendiculaire à la direction axiale (A), qui est au moins aussi grande que la surface de section transversale ($Q_1$) de l'élément de soutien (4) perpendiculairement à la direction axiale (A) dans le tronçon de l'élément de soutien (4) qui plonge dans la chambre de récipient (22), et le rapport $Q_2/Q_1$ est de préférence dans la plage de 1,2 à 5, de préférence 1,5 à 4, et de manière particulièrement préférée environ 2,3.

3. Dispositif de soutien selon l'une des revendications précédentes,
dans lequel le rapport volumétrique (dV) du volume intérieur ($V_2$) de la chambre de récipient (22) sur le volume ($V_1$) du tronçon, plongé dans la chambre de récipient (22), de l'élément de soutien (4) totalement rétracté dans la chambre de récipient (22) est de préférence dans la plage de 1,5 à 3, et de manière particulièrement préférée de 2 à 2,5.

4. Dispositif de soutien selon l'une des revendications précédentes,
dans lequel l'élément de soutien (4) est rétractable dans la chambre de récipient (22) avec une profondeur de plongée maximale ($h_1$),
dans lequel la chambre de récipient (22) présente une extension maximale ($h_2$) le long de la direction axiale (A), et

dans lequel le rapport de $h_1$ sur $h_2$ est de préférence d'environ 0,6 à 1, de manière particulièrement préférée d'environ 0,7 à 0,95, et de manière encore plus préférée d'environ 0,9.

5. Dispositif de soutien selon les revendications 2 et 4, dans lequel une hauteur de remplissage maximum ($h_{max}$) de l'agent lubrifiant (8) dans la chambre de récipient (22) est fixée selon la formule $h_{max} = h_2 - h_1 \cdot Q_1/Q_2$, de sorte que lorsque la profondeur de rétraction de l'élément de soutien (4) dans la chambre de récipient (22) de l'unité de réservoir (2) est maximum, le pressage de l'agent lubrifiant (8) hors de la chambre de récipient (22) est empêché.

6. Dispositif de soutien selon l'une des revendications précédentes, dans lequel la chambre de récipient (22) est l'élément de soutien (4) sont réalisés sensiblement à symétrie de révolution autour de la direction axiale (A).

7. Dispositif de soutien selon la revendication 6, dans lequel le rapport du diamètre intérieur ($d_2$) de la chambre de récipient (22) sur le diamètre extérieur ($d_1$) de l'élément de soutien (4) est dans la plage de 1,1 à 4, de préférence de 1,4 à 3, et de manière particulièrement préférée de 1,53.

8. Dispositif de soutien selon l'une des revendications précédentes, dans lequel la chambre de récipient (22) comporte un élargissement de section transversale (23) à son extrémité tournée vers l'élément de soutien (4), en particulier un élargissement en forme de trémie.

9. Dispositif de soutien selon l'une des revendications précédentes, dans lequel l'unité portante (6) comprend une portion de corps creux (61) qui s'étend sensiblement le long de la direction axiale (A), dans lequel la portion de corps creux (61) comporte une échancrure transversalement à la direction axiale (A), à travers laquelle peut être passée une conduite d'alimentation (65) jusqu'à une échancrure prévue sur l'unité à réservoir (2) perpendiculairement à la direction axiale, de sorte que l'agent lubrifiant (8) peut être admis dans la chambre de récipient (22) perpendiculairement à la direction axiale.

Fig. 1

# Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3489395 A
- US 2352117 A
- EP 2223830 A